# EUROPÄISCHE PATENTSCHRIFT

(11) **EP 1 431 082 B1**
(45) Veröffentlichungstag und Bekanntmachung des Hinweises auf die Patenterteilung: **26.09.2007**
(21) Anmeldenummer: 03027674.5
(22) Anmeldetag: 03.12.2003
(51) Int. Cl.: B60G 15/06

(54) **Federbein für eine Kraftfahrzeug-Radaufhängung**
Suspension strut for a vehicle suspension
Jambe de suspension pour un véhicule automobile

(30) Priorität: 17.12.2002 DE 10258936
(43) Veröffentlichungstag der Anmeldung: 23.06.2004
(73) Patentinhaber: Volkswagen Aktiengesellschaft, 38436 Wolfsburg (DE)
(72) Erfinder: Hansen, Jörn-Henning, 38179 Lagesbüttel (DE); Metzner, Dirk, 38112 Braunschweig (DE); Hoffmann, Bernd, 38106 Braunschweig (DE)

(56) Entgegenhaltungen:
- EP-A- 0 976 591
- FR-A- 2 803 250
- US-A- 6 082 720
- US-A1- 2002 135 213

## Beschreibung

Die Erfindung bezieht sich auf ein Federbein für eine Kraftfahrzeug-Radaufhängung und insbesondere auf eine verbesserte Abstützung der zugehörigen Schraubenfeder. Im besonderen bezieht sich die Erfindung auf ein Federbein nach dem Oberbegriff von Patentanspruch 1.

Aus der DE 42 03 658 C2 ist eine Schraubenfederabstützung bekannt, bei der zwischen der Schraubenfeder und einem Federteller eine Zentrierung und eine Verdrehsicherung vorgesehen ist. Der an dem Federteller abzustützende Endabschnitt der Schraubenfeder sowie eine korrespondierende seitliche Stützwand an dem Federteller sind hierzu unrund ausgebildet. Auf diese Weise ist es möglich, die Schraubenfeder lagegenau einzubauen. Dies ist insbesondere dann von Bedeutung, wenn die Schraubenfeder gegenüber der Achse eines Schwingungsdämpfers des Federbeins geneigt angeordnet wird.

Da bei dieser bekannten Schraubenfederabstützung die Unrundheit an der Schraubenfeder und an dem Federteller der Zentrierung der Schraubenfeder dient, müssen an den betreffenden Elementen enge Toleranzen eingehalten werden. Dies führt zu Schwierigkeiten bei der Herstellung und bei der Montage.

Die eigentliche Abstützfläche des Federtellers, welche die axialen Federkräfte aufnimmt, ist bei der bekannten Schraubenfederabstützung steigungslos ausgebildet, so daß die zugehörige Federabstützlinie in einer Ebene verläuft.

Weiterhin ist aus dem Stand der Technik bekannt, die Neigung der Abstützfläche des Federtellers an die Steigung der Schraubenfeder anzupassen, so daß eine Abflachung des Federendabschnitts vermieden wird. Dies wird beispielsweise in der DE 40 21 314 C2 offenbart. Allerdings ist mit den heutigen Herstellungsmethoden für Schraubenfedern eine Abflachung des Federendabschnitts, wie sie in der DE 40 21 314 C2 noch als fertigungstechnisch aufwendig beschrieben wird, kein Problem mehr. Fertigungstechnische Gründe in bezug auf die Federherstellung können somit heute eine an die Steigung der Feder angepaßte Neigung der Abstützfläche an dem Federteller nicht mehr rechtfertigen.

Die DE 40 21 314 C2 lehrt in diesem Zusammenhang Federsitze, deren axiale Abstützfläche in ihrer Neigung der auslaufenden Wicklung des Federendabschnitts angepaßt ist und die jeweilige Schraubenfeder zentriert.

Werden bei einem Federbein die Dämpferachse und die Federachse desaxiert, so kann eine enge Zentrierung der Schraubenfeder an dem Federteller unter Last zu Verzwängungen führen. Dies bewirkt wiederum eine verstärkte mechanische Beanspruchung des Federtellers und beeinträchtigt das Dämpfungsverhalten insbesondere beim Ansprechen der Federung.

Bei herkömmlichen Schraubenfederabstützungen mit rundem Federendabschnitt besteht bei einer Desaxierung wiederum das Problem, daß sich unter Last die Schraubenfeder gegenüber dem Federteller mitunter verdreht. Die Verdrehung bleibt bestehen und führt zu einer Verschlechterung des Federungsverhaltens, das sich wiederum nachteilig auf das Fahrverhalten auswirkt.

Weiterhin ist zu berücksichtigen, daß die in einer Schraubenfeder auftretenden Schubspannungen u.a. proportional zu dem Körperdurchmesser der Feder sind. Eine Verminderung des Körperdurchmessers führt also tendenziell zu einer Verminderung der Schubspannungen in der Feder. Andererseits wird für die Abstützung der Feder an dem Federteller jedoch eine ausreichende Abwälzbasis benötigt.

Außerdem führt eine Verringerung des Abstands zwischen der Federauflage und der Dämpferachse zu einer deutlichen Reduzierung der Beanspruchung des Federtellers.

Aus der US 6,082,720 A1 ist ein Federbein mit den Merkmalen des Oberbegriffs von Patentanspruch 1 bekannt. In einer Ausgestaltungsvariante ist ein Federsitz vorgesehen, dessen Abstützfläche für die Feder relativ zu der Federachse geneigt ist. Hierdurch läßt sich die Querkraftkomponente, die auf den Dämpfer einwirkt, beeinflussen. Dazu ist der Federsitz relativ zu einem am Dämpfer befestigten Halter verdrehbar. Durch ein Verdrehen des Federsitzes kann insbesondere die Ausrichtung der Federachse verändert werden. Um eine gute Verstellbarkeit zu gewährleisten, ist die Feder am Federende abgeflacht und der Federsitz entsprechend an die abgeflachte Steigung angepasst. Zudem weist der Federsitz einen Anschlag für ein Federende auf. Gemäß der US 6,082,720 A1 dient der Federsitz folglich zur Zentrierung und vermutlich auch zur Sicherung einer Verdrehbewegung. Diese Ausgestaltung ist jedoch in Bezug auf die Montage der Feder im Federsitz aufwendig, da eine genaue Einpassung zu beachten ist. Zudem besteht bei Fertigungsabweichungen die Gefahr von Zwängungen. Sollen solche vermieden werden, müssen die betreffenden Bauteile mit hoher Genauigkeit ausgeführt werden. Überdies ergeben sich je nach Einstellung im Betrieb komplexe Spannungszustände im Federendabschnitt und im Federsitz. Hierdurch kann es zu Störkräften und einer unerwünschten Geräuschbildung kommen.

Die EP 0 976 591 A1 offenbart ebenfalls ein Federbein, bei dem die Federachse und die Dämpferachse desachsiert sind. Das untere Ende der Feder ist oval ausgebildet. Zudem ist das Ende der Feder abgeflacht, so daß diese eine plane Endfläche aufweist. Die Abstützfläche am Federhalter ist ebenfalls plan. Sie ist gegenüber der Federachse geneigt. Eine Verdrehsicherung eines Federendabschnitts an einem Anschlag ist der EP 0 976 591 A1 nicht zu entnehmen, da die geplante Federendfläche kein Widerlager besitzt. Die Feder ist lose in einem unteren Federteller gehalten ist. Eine definierte Lagefestlegung ist nicht erkennbar. Im Betrieb besteht somit die Gefahr, daß die Feder sowohl seitlich als in Drehrichtung verrutscht, so dass sich die Federachse verlagert. Hierdurch verändern sich die Federeigenschaften des Dämpferbeins, was in der Praxis nicht erwünscht ist.

Ein weiteres Federbein, bei dem die Federachse und die Dämpferachse desachsiert sind, ist in der US 2002/0135213 A1 offenbart.

Vor diesem Hintergrund liegt der Erfindung die Aufgabe zugrunde, ein Federbein zu schaffen, das bei einer Desaxierung der Federachse und der Dämpferachse ein gutes Ansprechverhalten besitzt, unter Last geringe Störkräfte erzeugt, gut herstellbar und montierbar ist und eine hohe Montagesicherheit aufweist.

Diese Aufgabe wird durch ein Federbein mit den Merkmalen von Patentanspruch 1 gelöst.

Die Erfindung wird dem vorstehend erläuterten komplexen Anforderungsprofil gerecht. Sie ermöglicht einerseits eine für die Montage ausreichend eindeutige Lagezuordnung zwischen der Schraubenfeder und dem Federteller, so daß ein Falscheinbau unterbleibt, vermeidet jedoch eine Zentrierung, die zu Verzwängungen führen würde. Dadurch werden wiederum die unter Last auftretenden Querkräfte, welche den Federteller mechanisch beanspruchen, gering gehalten und ein gutes Ansprechverhalten des Federbeins erzielt. Dennoch bleibt im Betrieb zwischen der Schraubenfeder und dem Federteller eine definierte Lagezuordnung gewährleistet, so daß Veränderungen infolge einer Verlagerung der Feder unterbleiben. Hierzu dient insbesondere die an dem Federteller vorgesehene Neigung in Verbindung mit dem Anschlag, die für die eigentliche Zentrierung und Verdrehsicherung sorgen.

Die Neigung an dem Federteller ist dabei im wesentlichen unabhängig von der Steigung der Feder. Sie dient hier primär dazu, unter Last eine definierte Anlage der Feder gegen den Anschlag zu bewirken. Die hieraus resultierende Kraftkomponente führt dazu, daß sich die Feder trotz der Desaxierung immer in Richtung des Federanschlags bewegt und somit ein Wegdrehen der Feder und eine damit verbundene Fehlpositionierung sicher vermieden wird. Eine Anpassung der Neigung der Abstützfläche an den Federteller ist hierbei nicht nötig. So können sowohl Federn mit angelegten oder plangeschliffenen Enden als auch Federn mit unbearbeiteten Enden zum Einsatz kommen.

Praktisch wird man die Neigung der Abstützfläche meist kleiner wählen als die Steigung der Schraubenfeder.

Gemäß einer vorteilhaften Ausgestaltung der Erfindung ist der Anschlag durch einen Wandvorsprung in der Abstützfläche gebildet, gegen den eine an dem ovalen Federendabschnitt befindliche Stirnseite einer auslaufenden Federwicklung anliegt. Der Anschlag ist so einfach herstellbar. Durch die hiermit verbundene Lagefestlegung der Feder wird ein genau definiertes Abwälzverhalten sichergestellt, das insbesondere ein gutes Ansprechverhalten der Feder ermöglicht.

An die geneigte Abstützfläche kann weiterhin eine ovale Innenwand anschließen, die im Zusammenbauzustand des Federbeins in den ovalen Federendabschnitt hineinragt. Damit läßt sich ein Falscheinbau der Feder vermeiden und eine gute Handhabung bei der Montage realisieren, weil die ovale Innenwand aufgrund der verzwängungsfreien Konfiguration lediglich als Aufsetzhilfe dient. Da die ovale Innenwand nicht der Zentrierung dient, können sowohl der Federendabschnitt als auch die als Aufsetzhilfe funktionierende ovale Innenwand mit verhältnismäßig niedrigen Toleranzanforderungen gefertigt werden.

Die ovale Innenwand muß nicht notwendigerweise durchgehend ausgebildet sein, sondern kann Unterbrechungen aufweisen oder durch einzelne Vorsprünge gebildet werden. Sie erfüllt ihre Funktion solange, wie eine grobe Lagefestlegung der Feder in bezug auf den Anschlag erhalten wird, um einen Falscheinbau zu unterbinden.

Um jegliche Verzwängungen bei der Montage und im späteren Betrieb zu vermeiden, ist im Zusammenbauzustand zwischen der ovalen Innenwand und dem ovalen Federendabschnitt vorzugsweise ein definierter Radialspalt vorgesehen.

In einer weiteren, vorteilhaften Ausgestaltung der Erfindung ist die Schraubenfeder mit einem S-Schlag oder C-Schlag in Richtung der großen Querachse der Ovalform vorgebogen. Hierdurch lassen sich Reibungseffekte verringern, die infolge von im Schwingungsdämpfer auftretenden Biegemomenten entstehen können, indem durch den S-Schlag bzw. C-Schlag gezielt ein Gegenmoment erzeugt wird. Dies führt in wiederum zu einer Verminderung oder vollständigen Beseitigung von Störkräften aus dem Einfederungsvorgang, wodurch die mechanischen Belastungen insbesondere am Federteller reduziert und das Ansprechverhalten weiter verbessert wird.

Vorzugsweise ist der Federteller als Blechformteil mit im wesentlichen konstanter Wanddicke ausgebildet. Er läßt sich so beispielsweise besonders einfach aus einer Blechronde durch Stanzumformen herstellen.

In vorteilhafter Ausgestaltung weist der Federteller eine Durchgangsöffnung für den Schwingungsdämpfer auf, um welche der ovale Federendabschnitt herum verläuft. Durch diese Öffnung kann beispielsweise eine Kolbenstange des Schwingungsdämpfers hindurchgeführt sein. Die Ovalisierung des Federendabschnitts bietet in diesem Zusammenhang neben einer Spannungsreduzierung die Möglichkeit, den Abstützbereich der Schraubenfeder bis unmittelbar an den Dämpfer zu legen und gleichzeitig die Abstützbasis im Federteller groß auszuführen.

Weiterhin ist es möglich, den Federteller integral mit einem Abschnitt eines Behälters des Schwingungsdämpfers auszubilden.

Nachfolgend wird die Erfindung anhand eines in der Zeichnung dargestellten Ausführungsbeispiels näher erläutert. Die Zeichnung zeigt in:
- Figur 1: eine Seitenansicht eines Federtellers für ein Federbein nach einem Ausführungsbeispiel der Erfindung,
- Figur 2: eine Ansicht von oben auf den Federteller aus Figur 1,
- Figur 3: einen Halbschnitt des Federtellers aus Figur 1 mit angedeuteter Feder im voll eingefederten Zustand mit einer Auflage von ca. 270 Grad gemessen vom Federanschlag, und in
- Figur 4: eine Schnittansicht entlang der Linie IV-IV in Figur 2.

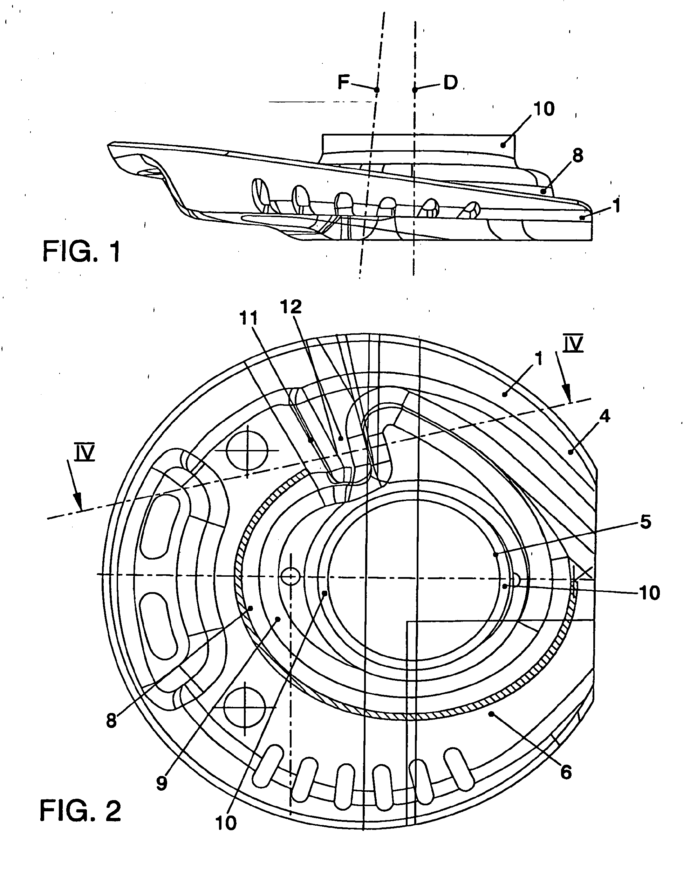

Das Ausführungsbeispiel zeigt in den Figuren 1 bis 4 verschiedene Ansichten eines Federtellers 1 für ein Federbein einer Kraftfahrzeug-Radaufhängung. Dessen weitere Komponenten, nämlich eine Schraubenfeder 2 und ein Schwingungsdämpfer sind in den Figuren durch ihre jeweiligen Achsen, d. h. die Federachse F und die Dämpferachse D angedeutet.

Die Schraubenfeder 2 stützt sich mit einem ovalen Federendabschnitt 3 an dem Federteller 1 ab, der hier als unterer Federteller ausgebildet ist. Jedoch kann die nachfolgend noch näher erläuterte Konfiguration auch an einem oberen Federteller einer oberen Schraubenfederabstützung verwendet werden. Im weiteren Verlauf ist die Form der Schraubenfeder 2 in ihrem Querschnitt weitgehend frei gestaltbar. Vorzugsweise geht jedoch der ovale Federendabschnitt 3 in einen runden Federkörper über.

Bei dem Ausführungsbeispiel sind, wie insbesondere den Figuren 1 und 2 entnommen werden kann, die Federachse F und die Dämpferachse D zueinander desaxiert. Genauer gesagt weist die Dämpferachse D zu der Federachse F einen axialen Versatz auf und ist darüber hinaus zu der Federachse F angewinkelt. Die Anwinklung und der Versatz sind dabei in Richtung der Ovalform des Federendabschnitts 3 vorgenommen, d. h. daß in diese Richtung sowohl eine Versatzkomponente als auch eine Winkelkomponente zu beobachten ist.

Zusätzlich zu Biegemomenten aus der Desaxierung weist die Schraubenfeder 2 eine Vorbiegung mit einem S-Schlag oder C-Schlag in etwa in Richtung der großen Querachse der Ovalform auf, wodurch dem Entstehen von Störkräften beim Einfederungsvorgang entgegengewirkt wird und querkraftbedingte Verspannungen an dem Federteller 1 gering bleiben oder ausgeschaltet werden. Außerdem wird die Reibung des Dämpferbeins reduziert.

Der in den Figuren dargestellte Federteller 1 weist in einer Ansicht von oben einen im wesentlichen kreisförmigen Grundkörper 4 auf, der an einer Seite, nämlich in Richtung der langen Achse der Ovalform, segmentförmig abgeschnitten ist. Versetzt zur Mitte des Grundkörpers 4 befindet sich eine kreisförmige Durchgangsöffnung 5. Diese Durchgangsöffnung 5 dient der Durchführung einer hier nicht näher dargestellten Kolbenstange des Schwingungsdämpfers.

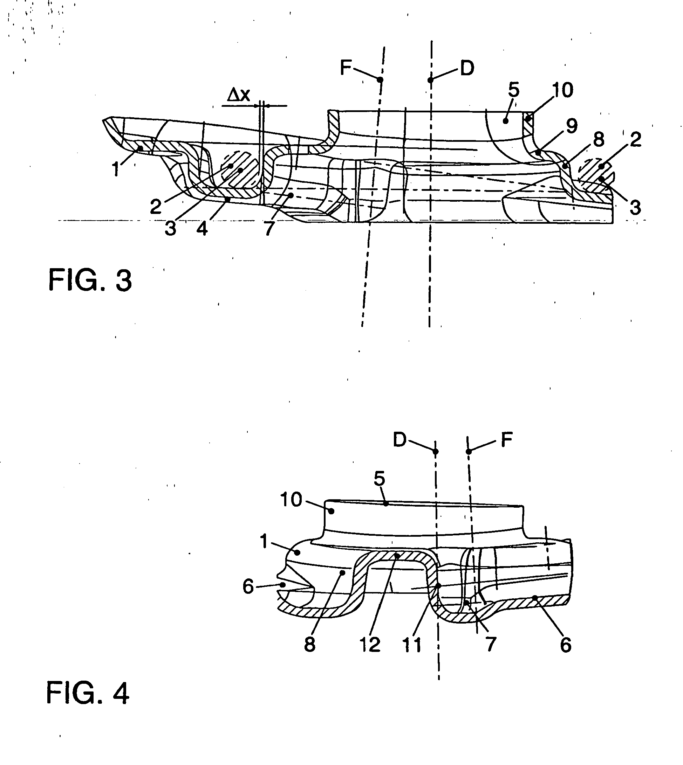

Um die Durchgangsöffnung 5 herum erstreckt sich eine Abstützfläche 6 für den ovalen Federendabschnitt 3 der Schraubenfeder 2. Die Auflage beträgt im voll eingefederten Zustand 270 Grad gemessen vom Federanschlag. Dies ist in Figur 2 durch den schraffierten Bereich angedeutet, der die maximal zulässige Abweichung von der theoretischen Auflagefläche definiert. Im voll ausgefederten Zustand beträgt die Auflagefläche nur ca. 90 Grad. In dem Schnitt nach Figur 3 hätte dann die Feder keinen Kontakt zum Federteller. Der ovale Federendabschnitt 3 ist unbearbeitet und weist, wie aus der angedeuteten Federlinie 7 in Figur 3 zu erkennen ist, eine größere Steigung auf, als die Neigung der Abstützfläche 6.

An die geneigte Abstützfläche 6 schließt radial innenseitig eine ovale Innenwand 8 an, die im Zusammenbauzustand des Federbeins in den ovalen Federendabschnitt 3 hineinragt. Zwischen der ovalen Innenwand 8 und dem ovalen Federendabschnitt 3 befindet sich ein Radialspalt Δx, der Verzwängungen zwischen der Innenwand 8 und dem Federabschnitt 3 ausschließt. Die radial Innenwand 8 geht über einen im wesentlichen horizontalen Abschnitt 9 stufenförmig in einen die Durchgangsöffnung 5 umgebenden Kragen 10. Dabei sitzt der Kragen 10 exzentrisch innerhalb der Ovalform.

Weiterhin ist im Bereich der geneigten Abstützflächen 6 ein Anschlag 11 zur Lagefestlegung der Schraubenfeder 2 ausgebildet. Der Anschlag 11 befindet sich an einem radialen Wandvorsprung 12 der ovalen Innenwand 8 und unterbricht die geneigte Abstützfläche 6. Bei einem Einfedem des Federbeins wird eine an einer auslaufenden Federwicklung des Federendabschnitts 3 befindliche Stirnseite gegen den Anschlag 11 gedrückt, um ein Wegdrehen der Schraubenfeder 2 unter Last zu verhindern.

Zu diesem Zweck ist der Anschlag 11 in bezug auf die Dämpferachse D und die Neigung der Abstützfläche 6 so angeordnet, daß eine unter Last aus der Neigung resultierende Querkraft die Schraubenfeder 2 gegen den Anschlag drängt.

Der Federteller 1 nach dem Ausführungsbeispiel ist als Blechformteil mit im wesentlichen konstanter Wanddicke ausgebildet und wird durch Stanzpressen hergestellt. Im Zusammenbauzustand kann der Federteller 1 gegen einen Behälter des Schwingungsdämpfers abgestützt werden. Alternativ hierzu ist es auch möglich, den Federteller 1 integral mit einem Abschnitt des Behälters zu vereinigen, beispielsweise als Deckel oder Boden desselben zu verwenden.

Mit dem vorstehend erläuterten Federbein wird eine Konstruktion geschaffen, die bei einer Desaxierung der Federachse und der Dämpferachse ein gutes Ansprechverhalten besitzt, unter Last geringe Störkräfte erzeugt, gut herstellbar und montierbar ist und eine hohe Montagesicherheit aufweist.

Die Erfindung ist jedoch nicht auf das erläuterte Ausführungsbeispiel beschränkt, sondern umfaßt vielmehr alle durch die beigefügten Patentansprüchen definierten Ausgestaltungsformen.

### BEZUGSZEICHENLISTE

- 1: Federteller
- 2: Schraubenfeder
- 3: Federendabschnitt
- 4: Grundkörper
- 5: Durchgangsöffnung
- 6: geneigte Abstützfläche
- 7: Federlinie
- 8: ovale Innenwand
- 9: horizontaler Übergangsabschnitt
- 10: Kragen der Durchgangsöffnung 5
- 11: Anschlag
- 12: Wandvorsprung
- D: Dämpferachse
- F: Federachse
- Δx: Spalt

## Patentansprüche

1. Federbein für eine Kraftfahrzeug-Radaufhängung, umfassend:
eine Schraubenfeder (2) mit einem Federendabschnitt (3),
einen Schwingungsdämpfer, dessen Dämpferachse (D) zu der Federachse (F) der Schraubenfeder (2) versetzt und/oder geneigt ist, und
einen Federteller (1), der eine geneigte Abstützfläche (6) für den Federendabschnitt (3) und einen Anschlag (11) zur Lagefestlegung der Schraubenfeder (2) aufweist, wobei der Anschlag (11) und die geneigte Abstützfläche (6) derart zueinander angeordnet sind, daß eine unter Last aus der Neigung resultierende Querkraft die Schraubenfeder (2) gegen den Anschlag (3) drängt, **dadurch** gekennzeichent, daß
der Federendabschnitt (3) oval ausgebildet ist,
die Dämpferachse (D) zu der Federachse (F) der Schraubenfeder (2) in Richtung der großen Querachse der Ovalform versetzt und/oder geneigt ist,
die Abstützfläche (6) als Abwälzfläche ausgebildet ist, an der der ovale Federendabschnitt (3) der Schraubenfeder (2) beim Ein- und Ausfedern auf der geneigten Abstützfläche abrollt, und
der Federendabschnitt (3) der Schraubenfeder (2) radial verzwängungsfrei an der Abstützfläche (6) abgestützt ist.

2. Federbein nach Anspruch 1, **dadurch gekennzeichnet, daß** der Anschlag (11) durch einen Wandvorsprung (12) in der Abstützfläche (6) gebildet ist, gegen den eine an dem ovalen Federendabschnitt (3) befindliche Stirnseite einer auslaufenden Federwicklung anliegt.

3. Federbein nach Anspruch 1 oder 2, **dadurch gekennzeichnet, daß** an die geneigte Abstützfläche (6) eine ovale Innenwand (8) anschließt, die im Zusammenbauzustand des Federbeins in den ovalen Federendabschnitt (3) hineinragt.

4. Federbein nach Anspruch 3, **dadurch gekennzeichnet, daß** im Zusammenbauzustand zwischen der ovalen Innenwand (8) und dem ovalen Federendabschnitt (3) ein Radialspalt (Ax) vorgesehen ist.

5. Federbein nach einem der Ansprüche 1 bis 4, **dadurch gekennzeichnet, daß** die Schraubenfeder (2) mit einem S-Schlag oder C-Schlag in Richtung der großen Querachse der Ovalform vorgebogen ist.

6. Federbein nach einem der Ansprüche 1 bis 5, **dadurch gekennzeichnet, daß** der Federteller (1) als Blechformteil mit im wesentlichen konstanter Wanddicke ausgebildet ist.

7. Federbein nach einem der Ansprüche 1 bis 6, **dadurch gekennzeichnet, daß** die Neigung der Abstützfläche (6) kleiner ist als die Steigung der Feder (2).

8. Federbein nach einem der Ansprüche 1 bis 7, **dadurch gekennzeichnet, daß** der Federteller (1) eine Durchgangsöffnung (5) für den Schwingungsdämpfer aufweist, um welche der ovale Federendabschnitt (3) herum verläuft.

9. Federbein nach einem der Ansprüche 1 bis 8, **dadurch gekennzeichnet, daß** der Federteller (1) integral mit einem Abschnitt eines Behälters des Schwingungsdämpfers ausgebildet ist.

## Claims

1. Suspension strut for a motor vehicle suspension system, comprising:
a helical spring (2) with a spring end section (3),
an oscillation damper, the damper axis .(D) of which is offset and/or inclined with respect to the spring axis (F) of the helical spring (2), and
a spring plate (1) which has an inclined supporting surface (6) for the spring end section (3) and a stop (11) for fixing the position of the helical spring (2), the stop (11) and the inclined supporting surface (6) being arranged with respect to each other in such a manner that a transverse force resulting from the inclination under load pushes the helical spring (2) against the stop (11), **characterized in that**
the spring end section (3) is of oval design,
the damper axis (D) is offset and/or inclined with respect to the spring axis (F) of the helical spring (2) in the direction of the large transverse axis of the oval shape,
the supporting surface (6) is designed as a rolling surface at which the oval spring end section (3) of the helical spring (2) rolls on the inclined supporting surface during the spring deflection and rebound, and
the spring end section (3) of the helical spring (2) is supported on the supporting surface (6) in a manner free from constraints radially.

2. Suspension strut according to Claim 1, **characterized in that** the stop (11) is formed in the supporting surface (6) by a wall projection (12) against which an end side of a petering-out spring coil, which end side is located on the oval spring end section (3), bears.

3. Suspension strut according to Claim 1 or 2, **characterized in that** an oval inner wall (8) which, in the assembled state of the suspension strut, protrudes into the oval spring end section (3) adjoins the inclined supporting surface (6).

4. Suspension strut according to Claim 3, **characterized in that**, in the assembled state, a radial gap (Δx) is provided between the oval inner wall (8) and the oval spring end section (3).

5. Suspension strut according to one of Claims 1 to 4, **characterized in that** the helical spring (2) is pre-bent with an S-twist or C-twist in the direction of the large transverse axis of the oval shape.

6. Suspension strut according to one of Claims 1 to 5, **characterized in that** the spring plate (1) is designed as a sheet-metal shaped part with an essentially constant wall thickness.

7. Suspension strut according to one of Claims 1 to 6, **characterized in that** the inclination of the supporting surface (6) is less than the pitch of the spring (2).

8. Suspension strut according to one of Claims 1 to 7, **characterized in that** the spring plate (1) has' a passage opening (5) for the oscillation damper, around which opening the oval spring end section (3) runs.

9. Suspension strut according to one of Claims 1 to 8, **characterized in that** the spring plate (1) is formed integrally with a section of a container of the oscillation damper.

## Revendications

1. Jambe de suspension pour une suspension de véhicule automobile, comprenant :
un ressort hélicoïdal (2) avec une partie terminale de ressort (3),
un amortisseur de vibrations, dont l'axe d'amortisseur (D) est décalé et/ou incliné par rapport à l'axe de ressort (F) du ressort hélicoïdal (2), et
une coupelle de ressort (1), qui présente une surface de soutien inclinée (6) pour la partie terminale de ressort (3) et une butée (11) pour la fixation en position du ressort hélicoïdal (2), sachant que la butée (11) et la surface de soutien inclinée (6) sont disposées l'une par rapport à l*'* autre de telle sorte qu'une force transversale en charge résultant de l*'* inclinaison pousse le ressort hélicoïdal (2) contre la butée (11), **caractérisée en ce que**
la partie terminale de ressort (3) est réalisée ovale, l'axe d*'* amortisseur (D) est décalé et/ou incliné par rapport à l'axe de ressort (F) du ressort hélicoïdal (2) en direction du grand axe transversal de la forme ovale,
la surface de soutien (6) est réalisée sous forme de surface de roulage, sur laquelle roule la partie terminale ovale (3) du ressort hélicoïdal (2) lors du rabattement et du débattement sur la surface de soutien inclinée, et
la partie terminale (3) du ressort hélicoïdal (2) s'appuie sans déformation radiale sur la surface de soutien (6).

2. Jambe de suspension selon la revendication 1, **caractérisée en ce que** la butée (11) est formée par une saillie de paroi (12) dans la surface de soutien (6), butée contre laquelle s'applique un côté frontal, se trouvant sur la partie terminale de ressort ovale (3), d'une spire terminale de ressort.

3. Jambe de suspension selon la revendication 1 ou 2, **caractérisée en ce qu'**une paroi intérieure ovale (8) se raccorde à la surface de soutien inclinée (6) et, dans l'état assemblé de la jambe de suspension, s'enfonce dans la partie terminale de ressort ovale (3).

4. Jambe de suspension selon la revendication 3, **caractérisée en ce qu'**une fente radiale (Δx) est prévue dans l'état assemblé entre la paroi intérieure ovale (8) et la partie terminale de ressort ovale (3).

5. Jambe de suspension selon l'une quelconque des revendications 1 à 4, **caractérisée en ce que** le ressort hélicoïdal (2) est précambré en S ou en C en direction du grand axe transversal de la forme ovale.

6. Jambe de suspension selon l*'* une quelconque des revendications 1 à 5, **caractérisée en ce que** la coupelle de ressort (1) est réalisée sous forme de pièce façonnée en tôle ayant une épaisseur de paroi sensiblement constante.

7. Jambe de suspension selon l'une quelconque des revendications 1 à 6, **caractérisée en ce que** l'inclinaison de la surface de soutien (6) est inférieure au pas du ressort (2).

8. Jambe de suspension selon l'une quelconque des revendications 1 à 7, **caractérisée en ce que** la coupelle de ressort (1) présente une ouverture de passage (5) pour l'amortisseur de vibrations, autour de laquelle s'étend la partie terminale de ressort ovale (3).

9. Jambe de suspension selon l'une quelconque des revendications 1 à 8, **caractérisée en ce que** la coupelle de ressort (1) est réalisée d'un seul tenant avec une partie d'un réceptacle de l'amortisseur de vibrations.
